# EUROPÄISCHE PATENTSCHRIFT

(11) **EP 1 566 711 B1**
(45) Veröffentlichungstag und Bekanntmachung des Hinweises auf die Patenterteilung: **13.02.2013**
(21) Anmeldenummer: 04028785.6
(22) Anmeldetag: 04.12.2004
(51) Int. Cl.: G05B 15/02, G05B 19/042

(54) **Rechnergesteuertes Haushaltsgerät**
Computer controllable household appliance
Appareil électroménager contrôlable par un ordinateur

(30) Priorität: 20.02.2004 DE 102004008335
(43) Veröffentlichungstag der Anmeldung: 24.08.2005
(73) Patentinhaber: Electrolux Home Products Corporation N.V., 1130 Brussel (BE)
(72) Erfinder: Kaiser, Kersten, 91541 Rothenburg (DE); Schulz, Thomas, 91605 Gallmersgarten (DE)
(74) Vertreter: Röder, Richard

(56) Entgegenhaltungen:
- EP-A- 1 186 694
- WO-A-01/12036
- WO-A-01/28068
- DE-A1- 10 057 849
- DE-A1- 10 100 826
- DE-A1- 10 201 217
- DE-A1- 10 220 723
- DE-A1- 19 615 840
- DE-C1- 19 963 293
- DE-U1- 20 203 117
- US-A- 4 914 277
- INNOS GMBH: "K}chenleitsysteme, ein Novum f}r die Branche innos-CuisineControl f}r die termingenaue Beegungsplanung und Programmierung der Garabl{ufe per Computer" FACHSYMPOSIUM COOK & CHILL IN DER GEMEINSCHAFTSVERPFLEGUNG, XX, XX, 20. April 1998 (1998-04-20), Seiten 1-15, XP002994169
- "Technik gewerblicher K}chen - Fachausschuss Haushalttechnik - Dokumentation der Jahrestagung 1999" TECHNIK GEWERBLICHER K}CHEN - FACHAUSSCHUSS HAUSHALTTECHNIKDOKUMENTA TION DER JAHRESTAGUNG, XX, XX, 1. Januar 1999 (1999-01-01), Seiten 47-61, XP002994170

## Beschreibung

Die Erfindung betrifft ein Haushaltsgerät oder dergleichen, das mittels eines EDV-Programms steuerbar und/oder regelbar ist, gemäß dem Oberbegriff des Patentanspruches 1.

Bei zahlreichen Haushaltsgeräten, die elektrische und elektronische Komponenten aufweisen, ist es in den letzten Jahren und Jahrzehnten üblich geworden, dass zur Steuerung und Regelung der Haushaltsgeräte ein EDV-Programm und ein Mikroprozessor verwendet werden. Dieses Konzept hat den Vorteil, dass für unterschiedliche Steuerungs-und Regelungsprozesse nur eine einzige Schaltung erforderlich ist, deren mögliche Betriebsarten durch entsprechende Programmierungen definiert sind.

Wird ein Haushaltsgerät weiterentwickelt, ist es in vielen Fällen ausreichend, das EDV-Programm zu überarbeiten, um neue Funktionen und Anwendungen zu ermöglichen. In diesen Fällen lassen sich neue Funktionen und Anwendungen mit Verwendung der bereits vorhandenen elektrischen, elektronischen,
elektromechanischen, mechanischen und dergleichen Komponenten durchführen. Mit diesem Konzept sind vorhandene Geräte lediglich durch Einlesen eines neuen EDV-Programm auf eine neueres Modell aufrüstbar. Dazu sind keine oder nur geringfügige konstruktive oder schaltungstechnische Änderungen erforderlich.

Um ein neues EDV-Programm einzulesen, sind jedoch geeignete standardisierte Schnittstellen erforderlich, wie sie beispielsweise bei EDV-Geräten verwendet werden. Die üblichen standardisierten Schnittstellen sind jedoch zumindest für Haushaltsgeräte schaltungstechnisch verhältnismäßig aufwändig.

Aus der DE 102 20 723 A1 ist ein Verfahren zur drahtlosen Datenübermittlung bekannt, das eine drahtlose Programmierung eines Haushaltsgeräts ermöglicht. Die Datenübermittlung erfolgt über ein Infrarotsignal von einem externen Gerät zum Haushaltsgerät. Das externe Gerät hat dabei eine ähnliche Funktion wie eine Fernbedienung. Als Infrarotschnittstelle am Haushaltsgerät wird ein Berührungssensor verwendet, der hauptsächlich als Bedienungselement vorgesehen ist.

Es ist Aufgabe der Erfindung, ein Haushaltsgerät oder dergleichen der eingangs genannten Art bereit zu stellen, das zusätzliche Funktionen aufweist, wobei der erforderliche konstruktive und schaltungstechnische Aufwand möglichst gering ist.

Diese Aufgabe wird durch den Gegenstand gemäß Patentanspruch 1 gelöst.

Erfindungsgemäß ist vorgesehen, dass die Schnittstelle zum bidirektionalen Datenaustausch zwischen dem Schreib-und Lesespeicher und der externen Einrichtung vorgesehen ist.

Der Kern der Erfindung liegt darin, dass Daten und EDV-Programme sowohl von der externen Einrichtung in den Schreib- und Lesespeicher eingelesen als auch vom Schreib- und Lesespeicher in die externe Einrichtung ausgelesen werden können. Insbesondere können ältere EDV-Programme durch neuere ersetzt werden. Weiterhin können die Betriebsarten des Haushaltsgeräts durch Austausch des EDV-Programms geändert oder modifiziert werden. Schließlich besteht auch die Möglichkeit, Daten aus dem Schreib-und Lesespeicher auszulesen, die beispielsweise für eine Fehleranalyse oder andere Untersuchungen verwendet werden können. Da die Schnittstelle bereits vorhanden ist, sind keine oder nur unwesentliche zusätzliche schaltungstechnische Ergänzungen erforderlich.

Vorzugsweise ist vorgesehen, dass das Haushaltsgerät wenigstens eine Messeinrichtung zum Erfassen einer oder mehrerer physikalischer Größen aufweist. Die erfassten physikalischen Größen können insbesondere zum Steuern und/oder Regeln des Haushaltsgeräts verwendet werden.

Weiterhin kann vorgesehen sein, dass der Schreib- und Lesespeicher zum Abspeichern der erfassten physikalischen Größen vorgesehen ist. Dieabgespeicherten physikalischen Größen können später jederzeit abgerufen und bei Bedarf ausgewertet werden.

Insbesondere ist vorgesehen, dass der Schreib- und Lesespeicher zum Abspeichern des zeitlichen Verlaufs der erfassten physikalischen Größen vorgesehen ist. Das Abspeichern des zeitlichen Verlaufs der erfassten physikalischen Größen ermöglicht Rückschlüsse auf den Zustand des vom Haushaltsgeräts behandelten Produkts oder Gegenstands. Weiterhin kann das Abspeichern des zeitlichen Verlaufs der erfassten physikalischen Größen auch bei einer Fehleranalyse vorteilhaft sein. Außerdem kann auch damit zu einem späteren Zeitpunkt noch festgestellt werden, ob der Betrieb des Haushaltsgeräts aufgrund eines Stromausfalls oder einer sonstigen Störung zwischenzeitlich unterbrochen war.

Bei einer vorteilhaften Ausführungsform kann vorgesehen sein, dass das Haushaltsgerät wenigstens eine Registriereinrichtung zum Erfassen eines oder mehrerer an der Bedienungseinrichtung eingestellter Parameter aufweist. Dazu kann weiterhin vorgesehen sein, dass der Schreib- und Lesespeicher zum Abspeichern der registrierten eingestellten Parameter vorgesehen ist. Insbesondere ist der Schreib- und Lesespeicher zum Abspeichern des zeitlichen Verlaufs der registrierten eingestellten Parameter vorgesehen. Auch diese Information kann für eine etwaige spätere Fehleranalyse vorteilhaft sein. Weiterhin werden durch die Kenntnis des zeitlichen Verlaufs der eingestellten Parameter Informationen über das Bedienungsverhalten der Benutzer des Haushaltsgeräts bereitgestellt. Außerdem besteht damit die Möglichkeit, den Energieverbrauch des Haushaltsgeräts zu überwachen und gegebenenfalls zu minimieren.

Es ist vorgesehen sein, dass die Schnittstelle drahtlos mit der externen Einrichtung gekoppelt oder koppelbar ist. Damit lässt sich auf schnelle und einfache Weise ein Austausch von Daten und EDV-Programmen zwischen dem Schreib- und Lesespeicher und der externen Einrichtung durchführen.

Für die drahtlose Verbindung ist vorgesehen, dass die Schnittstelle mittels einer Infrarotsignalverbindung mit der externen Einrichtung gekoppelt oder koppelbar ist. Die Infrarotsignalverbindung ist für kürzere Entfernungen zwischen der Schnittstelle und der externen Einrichtung besonders geeignet. Die Infrarotsignalverbindung ist weitgehend unempfindlich gegenüber Störungen und verursacht auch keine Störungen bei anderen Geräten.

Es ist vorgesehen, dass die Schnittstelle wenigstens einen Berührungssensor umfasst. Zahlreiche Haushaltsgeräte verwenden Berührungssensoren als Bedienungselemente. Die Berührungssensoren sind oftmals für die drahtlose Signalübertragung geeignet. Damit können bereits im Haushaltsgerät vorhandene Berührungssensoren als Schnittstelle verwendet werden, was keinen zusätzlichen konstruktiven Aufwand bedeutet.

Es ist vorgesehen, dass der Berührungssensor auf Infrarotsignale anspricht. Damit kann mit geringem Aufwand ein bereits vorhandener Berührungssensor als Infrarot-Schnittstelle verwendet werden.

Alternativ dazu kann vorgesehen sein, dass die Schnittstelle mittels einer oder mehrerer elektrischer Leitungen mit der externen Einrichtung gekoppelt oder koppelbar ist. Elektrische Leitungen ermöglichen eine besonders zuverlässige und störungsfreie Übertragung von Signalen.

Vorzugsweise ist vorgesehen, dass die Schnittstelle eine Anschlussbuchse für ein oder mehrere Zubehörteile des Haushaltsgeräts ist. Damit kann eine bereits vorhandene Einrichtung zum Anschließen elektrischer Leitungen verwendet werden. Zahlreiche Haushaltsgeräte weisen Zubehörteile auf, die mittels einer Anschlussbuchse am Haushaltsgerät anschließbar sind. Auf diese Weise kann mit geringem Aufwand eine Schnittstelle bereitgestellt werden.

Hinsichtlich der Anwendung kann vorgesehen sein, dass das Haushaltsgerät zum Behandeln und/oder Verarbeiten von Nahrungsmitteln vorgesehen ist. Für die Behandlung und Verarbeitung von Nahrungsmitteln müssen die Betriebsparameter besonders genau eingestellt werden. Insbesondere der zeitliche Verlauf der Temperatur ist ein wesentliches Kriterium. Dies lässt sich mit dem EDV-Programm zuverlässig steuern und regeln.

Bei der bevorzugten Ausführungsform ist vorgesehen, dass das Haushaltsgerät ein Gargerät ist. Insbesondere bei Gargeräten ist eine Vielzahl unterschiedlicher EDV-Programme besonders vorteilhaft. Für zahlreiche verschiedene Zubereitungsarten kann beispielsweise der Temperaturverlauf gesteuert und/oder geregelt werden. Dies bewirkt eine Automatisierung des Garvorgangs.

Beispielsweise ist vorgesehen, dass das Haushaltsgerät ein Haushaltsherd ist. Durch das EDV-Programm kann bei einem Haushaltsherd beispielsweise gewährleistet werden, das eine bestimmte verhältnismäßig hohe Temperatur nur über einen begrenzten Zeitraum eingestellt wird, um ein Anbrennen der Speisen zu vermeiden. Außerdem kann durch das EDV-Programm verhindert werden, dass Speisen zu lange einer zu hohen Temperatur ausgesetzt sind.

Weiterhin ist vorgesehen, dass das Haushaltsgerät ein Kochfeld ist. Auch für ein Kochfeld lassen sich durch die Verwendung von EDV-Programmen zahlreiche unterschiedliche Betriebsarten bereitstellen.

Ebenso kann vorgesehen sein, dass das Haushaltsgerät ein Back- und/oder Bratofen ist. Beispielsweise kann für den Back- und/oder Bratofen ein EDV-Programm eingelesen werden, das den idealen Temperaturverlauf zum Warmhalten von bereits zubereiteten Speisen ermöglicht.

Bei einer anderen Anwendung kann vorgesehen sein, dass das Haushaltsgerät zur Lagerung von Nahrungsmitteln vorgesehen ist.' Dazu sind besondere Bedingungen erforderlich, damit die Nahrungsmittel möglichst lange haltbar sind. Auch dies ist mittels des EDV-Programms zuverlässig steuer- und regelbar.

Vorzugsweise ist vorgesehen, dass die Parameter für die Lagerung, beispielsweise Temperatur, Druck, Feuchtigkeit und dergleichen steuerbar und/oder regelbar sind. Dies wesentlich zur Haltbarkeit der Nahrungsmittel bei.

Insbesondere ist vorgesehen, dass das Haushaltsgerät ein Kühlgerät, Gefriergerät oder dergleichen ist. Auch für Kühl- und Gefriergeräte kann es vorteilhaft sein, wenn beispielsweise der Temperaturverlauf mittels eines EDV-Programms steuerbar und/oder regelbar ist.

Weiterhin kann auch bei Kühl- und Gefriergeräten das Auslesen von Dateien aus dem Schreib- und Lesespeicher von Vorteil sein. Der Benutzer kann beispielsweise nach längerer Abwesenheit kontrollieren, ob in den letzten Tagen oder Wochen die zulässige Höchsttemperatur unterschritten stets worden ist. Damit lässt sich nachträglich feststellen, ob das Kühl- oder Gefriergerät vorübergehend ausgefallen ist. Auf diese Weise lässt sich feststellen, ob Nahrungsmittel möglicherweise nicht mehr verzehrbar sind.

Für die Bedienung des Haushaltsgeräts ist vorgesehen, dass das Einlesen von der externen Einrichtung in den Schreib- und Lesespeicher durch eine vorbestimmte Hintereinanderbetätigung mehrerer Bedienungseinrichtungen aktivierbar ist. Damit sind keine zusätzlichen Bedienungseinrichtungen erforderlich, um das Einlesen zu aktivieren. Außerdem besteht die Möglichkeit, die Reihenfolge der Betätigung der Bedienungseinrichtungen nur einem begrenzten Benutzerkreis zugänglich zu machen, der dadurch die exklusive Möglichkeit hat, den Schreib- und Lesespeicher zu programmieren.

Es ist vorgesehen, dass das Auslesen von dem Schreib- und Lesespeicher in die externe Einrichtung durch eine weitere vorbestimmte Hintereinanderbetätigung mehrerer Bedienungseinrichtungen aktivierbar ist. Damit sind auch zum Auslesen sind keine zusätzlichen Bedienungseinrichtungen erforderlich. Auch bei Auslesen besteht die Möglichkeit, die Reihenfolge der Betätigung der Bedienungseinrichtungen einem begrenzten Benutzerkreis zugänglich zu machen, der dadurch exklusiven Zugriff auf den Inhalt des Schreib- und Lesespeichers hat.

Weitere Merkmale, Vorteile und besondere Ausführungsformen der Erfindung sind Gegenstand der Unteransprüche. Bevorzugte Ausführungsformen der Erfindung werden nachstehend anhand verschiedener Beispiele näher erläutert.

### Beispiel 1:

Es gibt zahlreiche Herde, die als Bedienungselemente Berührungssensoren aufweisen, die mit Infrarotsignalen arbeiten. Diese Berührungssensoren sind auch als Schnittstelle für Infrarotverbindungen geeignet. Somit ist in diesem Fall für das Haushaltsgerät kein größerer Aufwand erforderlich, um den Berührungssensor alls Infrarotschnittstelle.zu verwenden.

Die externe Einrichtung benötigt eine dazu kompatible Schnittstelle für Infrarotverbindungen. Als externe Einrichtung kann beispielsweise ein Personalcomputer, ein Laptop, ein Notebook oder dergleichen Einrichtung verwendet werden. Bei diesem Beispiel ist durch die Verwendung der Berührungssensoren der konstruktive Mehraufwand verhältnismäßig gering, um einen bidirektionalen Datenaustausch zwischen dem Haushaltsgerät und der externen Einrichtung zu ermöglichen.

Es können insbesondere neue Versionen des EDV-Programms vorn der externen Einrichtung über die Infrarotverbindung in den Schreib- und Lesespeicher des Haushaltsgeräts eingelesen werden. Dabei werden die Daten vorzugsweise seriell übertragen, wodurch der Aufwand sich innerhalb vertretbarer Grenzen bewegt.

Umgekehrt können über die Infrarotverbindung Daten vom Schreib- und Lesespeicher zur externen Einrichtung übertragen werden. Die Daten können beispielsweise von einem Personalcomputer, Notebook oder dergleichen ausgewertet werden. Damit lassen sich Fehleranalysen unterstützen, wenn beispielweise der zeitliche Verlauf der Betriebsparameter abgespeichert worden ist. Außerdem können damit Untersuchungen über die Verwendungsgewohnheiten der Benutzer durchgeführt werden.

### Beispiel 2:

Es gibt zahlreiche Herde, die eine Anschlussbuchse für eine Fleischspießsonde oder dergleichen Sensor aufweisen. Die Fleischspießsonde ist zum Erfassen der Temperatur im Inneren eines Bratguts oder Backguts vorgesehen. In diesem Beispiel wird die Anschlussbuchse für die Fleischspießsonde als Schnittstelle verwendet. Für die externe Einrichtung ist lediglich ein zur Anschlussbuchse kompatibler Anschlussstecker erforderlich.

Als externe Einrichtung kann ein Personalcomputer, ein - Laptop, ein Notebook oder dergleichen Einrichtung verwendet werden. Die Datenübertragung kann mittels einer Niederspannung erfolgen, was hinsichtlich der Gerätesicherheit besonders vorteilhaft ist. Bei diesem Beispiel ist durch die Verwendung dieser Buchse der konstruktive Mehraufwand besonders gering, um einen bidirektionalen Datenaustausch zwischen dem Haushaltsgerät und der externen Einrichtung zu ermöglichen.

Es können insbesondere neue Versionen des EDV-Programms von der externen Einrichtung über die Anschlussbuchse in den Schreib- und Lesespeicher des Haushaltsgeräts eingelesen werden. Dabei werden die Daten über die Anschlussbuchse vorzugsweise seriell übertragen, wodurch der schaltungstechnische Aufwand nicht all zu groß ist.

Umgekehrt können über die Anschlussbuchse Daten vom Schreib- und Lesespeicher zur externen Einrichtung übertragen werden. Die Daten können insbesondere von einem Personalcomputer, Notebook oder dergleichen aufgewertet werden. Damit lassen sich Fehleranalysen unterstützen, wenn beispielsweise der zeitlich Verlauf der Betriebsdaten abgespeichert worden ist. Außerdem können damit Untersuchungen über die Verwendungsgewohnheiten der Benutzer durchgeführt werden.

Grundsätzlich ist die erfinderische Idee für sämtliche elektrischen und elektronischen Geräte geeignet, die mittel eines EDV-Programms steuerbar und/oder regelbar sind und die eine Einrichtung aufweisen, die als Schnittstelle verwendbar ist. Für Haushaltsgeräte ist die erfinderische Idee aus ökonomischen Gründen besonders vorteilhaft, da der konstruktive und schaltungstechnische Mehraufwand verhältnismäßig gering ist. Die erfinderische Idee kann in vorteilhafter Weise für alle Arten von Haushaltsgeräten verwendet werden, die mittel eines EDV-Programms steuerbar und/oder regelbar sind und die eine Einrichtung aufweisen, die als Schnittstelle verwendbar ist.

## Patentansprüche

1. Haushaltsgerät, insbesondere zum Behandeln und/oder Verarbeiten von Nahrungsmitteln, das mittels eines EDV-Programms steuerbar und/oder regelbar ist, wobei das Haushaltsgerät folgendes aufweist:
- wenigstens eine elektrische und/oder elektronische Komponente;
- wenigstens eine Bedienungseinrichtung;
- wenigstens einen Mikroprozessor zum Ansteuern der wenigstens einen Komponente;
- wenigstens einen Schreib- und Lesespeicher, der mit dem Mikroprozessor gekoppelt und zum Abspeichern des EDV-Programms vorgesehen ist; und
- wenigstens eine Schnittstelle, die innerhalb des Haushaltsgeräts mit dem Mikroprozessor und/oder dem Schreib- und Lesespeicher gekoppelt ist und die außerhalb des Haushaltsgeräts mit einer externen Einrichtung und/oder mit einem Zubehörteil des Haushaltsgeräts koppelbar ist; wobei
- die Schnittstelle zum Datenaustausch zwischen dem Schreib- und Lesespeicher und der externen Einrichtung vorgesehen ist; wobei
- die Schnittstelle drahtlos mittels einer Infrarotsignalverbindung mit der externen Einrichtung gekoppelt oder koppelbar ist; wobei
- die Schnittstelle wenigstens einen Berührungssensor umfasst, der auf Infrarotsignale anspricht; und wobei
- der Berührungssensor als Bedienungselement vorgesehen ist;
**dadurch gekennzeichnet, dass**
- die Schnittstelle zum bidirektionalen Datenaustausch zwischen dem Schreib- und Lesespeicher und der externen Einrichtung vorgesehen ist;
- das Einlesen von der externen Einrichtung in den Schreib- und Lesespeicher durch eine vorbestimmte Hintereinanderbetätigung mehrerer Bedienungseinrichtungen aktivierbar ist; und
- das Auslesen von dem Schreib- und Lesespeicher in die externe Einrichtung durch eine vorbestimmte Hintereinanderbetätigung mehrerer Bedienungseinrichtungen aktivierbar ist.

2. Haushaltsgerät nach Anspruch 1,
**dadurch gekennzeichnet, dass**
das Haushaltsgerät wenigstens eine Messeinrichtung zum Erfassen einer oder mehrerer physikalischer Größen aufweist.

3. Haushaltsgerät nach Anspruch 2,
**dadurch gekennzeichnet, dass**
der Schreib- und Lesespeicher zum Abspeichern der erfassten physikalischen Größen vorgesehen ist.

4. Haushaltsgerät nach Anspruch 2 oder 3,
**dadurch gekennzeichnet, dass**
der Schreib- und Lesespeicher zum Abspeichern des zeitlichen Verlaufs der erfassten physikalischen Größen vorgesehen ist.

5. Haushaltsgerät nach einem der Ansprüche 1 bis 4,
**dadurch gekennzeichnet, dass**
das Haushaltsgerät wenigstens eine Registriereinrichtung zum Erfassen eines oder mehrerer an der Bedienungseinrichtung eingestellter Parameter aufweist.

6. Haushaltsgerät nach Anspruch 5,
**dadurch gekennzeichnet, dass**
der Schreib- und Lesespeicher zum Abspeichern der registrierten eingestellten Parameter vorgesehen ist.

7. Haushaltsgerät nach Anspruch 5 oder 6,
**dadurch gekennzeichnet, dass**
der Schreib- und Lesespeicher zum Abspeichern des zeitlichen Verlaufs der registrierten eingestellten Parameter vorgesehen ist.

8. Haushaltsgerät nach einem der Ansprüche 1 bis 7,
**dadurch gekennzeichnet, dass**
das Haushaltsgerät ein Gargerät ist.

9. Haushaltsgerät nach Anspruch 8,
**dadurch gekennzeichnet, dass**
das Haushaltsgerät ein Haushaltsherd ist.

10. Haushaltsgerät nach Anspruch 8,
**dadurch gekennzeichnet, dass**
das Haushaltsgerät ein Kochfeld ist.

11. Haushaltsgerät nach Anspruch 8,
**dadurch gekennzeichnet, dass**
das Haushaltsgerät ein Back- und/oder Bratofen ist.

12. Haushaltsgerät nach einem der Ansprüche 1 bis 7,
**dadurch gekennzeichnet, dass**
das Haushaltsgerät zur Lagerung von Nahrungsmitteln vorgesehen und beispielsweise ein Kühlgerät oder Gefriergerät ist.

13. Haushaltsgerät nach Anspruch 12,
**dadurch gekennzeichnet, dass**
die Parameter für die Lagerung, beispielsweise Temperatur, Druck, Feuchtigkeit und dergleichen steuerbar und/oder regelbar sind.

## Claims

1. Domestic appliance, in particular for treating and/or processing foodstuffs, which can be controlled and/or regulated by means of a EDP program, wherein the domestic appliance has the following:
- at least one electric and/or electronic component;
- at least one operating device;
- at least one microprocessor for activating the at least one component;
- at least one read-and-write memory which is coupled to the microprocessor and is provided for storing the EDP program; and
- at least one interface which within the domestic appliance is coupled to the microprocessor and/or the read-and-write memory and which outside of the domestic appliance can be coupled to an external device and/or to an accessory part of the domestic appliance; wherein
- the interface is provided for data exchange between the read-and-write memory and the external device; wherein
- the interface is coupled or can be coupled to the external device in wireless manner by means of an infrared signal connection; wherein
- the interface comprises at least one touch sensor which responds to infrared signals; and wherein
- the touch sensor is provided as an operating element;
**characterised in that**
- the interface is provided for bidirectional data exchange between the read-and-write memory and the external device;
- the reading-in from the external device into the read-and-write memory can be activated by predetermined successive actuation of several operating devices; and
- the reading-out from the read-and-write memory into the external device can be activated by predetermined successive actuation of several operating devices.

2. Domestic appliance according to claim 1, **characterised in that** the domestic appliance has at least one measuring device for recording one or more physical parameters.

3. Domestic appliance according to claim 2, **characterised in that** the read-and-write memory is provided for storing the recorded physical parameters.

4. Domestic appliance according to claim 2 or 3, **characterised in that** the read-and-write memory is provided for storing the temporal course of the recorded physical parameters.

5. Domestic appliance according to one of claims 1 to 4, **characterised in that** the domestic appliance has at least one registration device for recording one or more parameters set at the operating device.

6. Domestic appliance according to claim 5, **characterised in that** the read-and-write memory is provided for storing the registered set parameters.

7. Domestic appliance according to claim 5 or 6, **characterised in that** the read-and-write memory is provided for storing the temporal course of the registered set parameters.

8. Domestic appliance according to one of claims 1 to 7, **characterised in that** the domestic appliance is a cooking appliance.

9. Domestic appliance according to claim 8, **characterised in that** the domestic appliance is a domestic cooker.

10. Domestic appliance according to claim 8, **characterised in that** the domestic appliance is a hob.

11. Domestic appliance according to claim 8, **characterised in that** the domestic appliance is a baking oven and/or roasting oven.

12. Domestic appliance according to one of claims 1 to 7, **characterised in that** the domestic appliance is provided for storing foodstuffs and is for example a refrigerator or freezer.

13. Domestic appliance according to claim 12, **characterised in that** the parameters for storage, for example temperature, pressure, humidity and the like, can be controlled and/or regulated.

## Revendications

1. Appareil électroménager, en particulier pour le traitement et/ou la transformation de denrées alimentaires, qui peut être contrôlé et/ou réglé au moyen d'un programme informatique, étant entendu que l'appareil électroménager comprend ce qui suit :
- au moins un composant électrique et/ou électronique ;
- au moins un dispositif de commande ;
- au moins un microprocesseur pour contrôler l'au moins un composant ;
- au moins une mémoire à écriture et à lecture qui est connectée au microprocesseur et prévue pour mémoriser le programme informatique ; et
- au moins une interface qui est connectée, à l'intérieur de l'appareil électroménager, au microprocesseur et/ou à la mémoire à écriture et à lecture et qui peut être connectée, à l'extérieur de l'appareil électroménager, à un dispositif externe et/ou à une partie accessoire de l'appareil électroménager ; étant entendu que :
- l'interface est prévue pour l'échange de données entre la mémoire à écriture et à lecture et le dispositif externe ;
- l'interface est connectée ou peut être connectée sans fil au dispositif externe au moyen d'une liaison à signal infrarouge ;
- l'interface comprend au moins un capteur à contact qui réagit aux signaux infrarouges ; et
- le capteur à contact est prévu en tant qu'élément de commande ;
**caractérisé en ce que** :
- l'interface est prévue pour l'échange de données bidirectionnel entre la mémoire à écriture et à lecture et le dispositif externe ;
- la lecture d'entrée à partir du dispositif externe peut être activée dans la mémoire à écriture et à lecture par un actionnement successif prédéterminé de plusieurs dispositifs de commande ; et
- la lecture de sortie à partir de la mémoire à écriture et à lecture peut être activée dans le dispositif externe par un actionnement successif prédéterminé de plusieurs dispositifs de commande.

2. Appareil électroménager selon la revendication 1, **caractérisé en ce que** l'appareil électroménager comprend au moins un dispositif de mesure pour déterminer une ou plusieurs grandeurs physiques.

3. Appareil électroménager selon la revendication 2, **caractérisé en ce que** la mémoire à écriture et à lecture est prévue pour mémoriser les grandeurs physiques déterminées.

4. Appareil électroménager selon la revendication 2 ou 3, **caractérisé en ce que** la mémoire à écriture et à lecture est prévue pour mémoriser la succession dans le temps des grandeurs physiques déterminées.

5. Appareil électroménager selon l'une quelconque des revendications 1 à 4,
**caractérisé en ce que** l'appareil électroménager comprend au moins un dispositif d'enregistrement pour saisir un ou plusieurs paramètres définis au niveau du dispositif de commande.

6. Appareil électroménager selon la revendication 5, **caractérisé en ce que** la mémoire à écriture et à lecture est prévue pour mémoriser les paramètres définis enregistrés.

7. Appareil électroménager selon la revendication 5 ou 6, **caractérisé en ce que** la mémoire à écriture et à lecture est prévue pour mémoriser la succession dans le temps des paramètres définis enregistrés.

8. Appareil électroménager selon l'une quelconque des revendications 1 à 7,
**caractérisé en ce que** l'appareil électroménager est un appareil de cuisson.

9. Appareil électroménager selon la revendication 8, **caractérisé en ce que** l'appareil électroménager est un foyer ménager.

10. Appareil électroménager selon la revendication 8, **caractérisé en ce que** l'appareil électroménager est une plaque de cuisson.

11. Appareil électroménager selon la revendication 8, **caractérisé en ce que** l'appareil électroménager est un four.

12. Appareil électroménager selon l'une quelconque des revendications 1 à 7,
**caractérisé en ce que** l'appareil électroménager est prévu pour le stockage de denrées alimentaires et est par exemple un réfrigérateur ou un congélateur.

13. Appareil électroménager selon la revendication 12, **caractérisé en ce que** les paramètres du stockage, par exemple, la température, la pression, l'humidité et les paramètres similaires, peuvent être contrôlés et/ou réglés.
